Europäisches Patentamt

European Patent Office

Office européen des brevets

(11) Veröffentlichungsnummer: **0 563 806 A2**

# (12) EUROPÄISCHE PATENTANMELDUNG

(21) Anmeldenummer: **93104992.8**

(22) Anmeldetag: **26.03.93**

(51) Int. Cl.⁵: **C10M 105/54**

(30) Priorität: **01.04.92 DE 4210700**

(43) Veröffentlichungstag der Anmeldung:
**06.10.93 Patentblatt 93/40**

(84) Benannte Vertragsstaaten:
**AT BE CH DE DK ES FR GB GR IE IT LI LU NL
PT SE**

(71) Anmelder: **Solvay Fluor und Derivate GmbH
Hans-Böckler-Allee 20
D-30173 Hannover(DE)**

(72) Erfinder: **Buchwald, Hans
Am Rodelberg 51A
W-3003 Ronnenberg 3(DE)**
Erfinder: **Hellmann, Joachim
Dohmeyers Weg 25
W-3000 Hannover 61(DE)**
Erfinder: **Raszkowski, Boleslaus
In der Hespe 246
W-3061 Wiedensahl(DE)**
Erfinder: **Barthélemy, Pierre
Rue Ford du Village, 23 A
B-1315 Pietrebais(BE)**
Erfinder: **Paulus, Mireille
Avenue Stienon, 7/3
B-1020 Bruxelles(BE)**

(74) Vertreter: **Lauer, Dieter, Dr.
c/o Solvay Deutschland GmbH,
Hans-Böckler-Allee 20
D-30002 Hannover (DE)**

(54) **Zusammensetzungen mit 1-Chlor-2,2,2-trifluorethyl-difluormethylether.**

(57) Beschrieben werden als Trenn- und Kühlschmiermittel geeignete flüssige Zusammensetzungen, die 1-Chlor-2,2,2-trifluorethyl-difluormethylether und ein schmierend und/oder trennend wirkendes Agens und gegebenenfalls weitere für Trenn- und Kühlschmiermittel übliche Zusätze enthalten. Ebenfalls beschrieben wird deren Verwendung als Trenn- oder Kühlschmiermittel sowie ein Verfahren zu deren Herstellung.

Die vorliegende Erfindung betrifft die Verwendung von 1-Chlor-2,2,2-trifluorethyl-difluormethylether als Bestandteil von als Trenn- und Kühlschmiermittel geeigneten flüssigen Zusammensetzungen sowie die Verwendung dieser Zusammensetzungen als Trenn- und Kühlschmiermittel und ein Verfahren zu deren Herstellung.

Bei vielen industriellen Arbeitsvorgängen müssen Hilfsmittel eingesetzt werden, durch die die Affinität zwischen verschiedenen Materialien, z.B. Werkstück und Werkzeug oder Formling und Form, möglichst gering gehalten werden kann. Dies wird im allgemeinen je nach Arbeitsvorgang durch den Einsatz von Trennmitteln oder Kühlschmiermitteln erreicht. So werden bei der Herstellung und Verarbeitung von Kunststoffen, Schaumstoffen, Baustoffen, Gummiartikeln, Reifen, Metallen, Gläsern, Keramikprodukten usw., die Herstellungstechniken wie Gießen, Formen, Pressen usw. umfassen, Trennmittel benötigt. Trennmittel sind in diesem Zusammenhang Mittel, welche feste oder flüssige Filme bilden, die die Adhäsionskräfte zwischen zwei aneinandergrenzenden Oberflächen verringern, d.h. ihr Verkleben verhindern und so als Trenn-, Schalmittel oder Gleitmittel wirksam werden. Sie können Lösungen oder Dispersionen von trennend wirksamen Agenzien sein.

Die spanende, trennende oder abrasive Bearbeitung von Metallen, also Metallbearbeitungsvorgänge wie z. B. Bohren, Schneiden, Stanzen, Fräsen, Drehen, Schleifen werden zumeist in Gegenwart von Kühlschmiermitteln durchgeführt. Neben der Kühlung und Schmierung dienen sie auch dazu, ein Verschweißen zwischen Werkstück und Werkzeug zu verhindern. Einer allzu schnellen Abnutzung der Werkzeuge wird vorgebeugt.

Nach K. Schardt, Kunststoffe, Band 72, Seite 461 - 462, 1982, ist die Verwendung von Silikonen, Metallseifen, Wachsen, fetten Ölen, synthetischen Polymeren und anorganischen Stoffen als trennend wirksame Agenzien bekannt. Als Lösungsmittel werden dabei flüssige aliphatische Kohlenwasserstoffe, halogenierte Kohlenwasserstoffe und Wasser genannt.

In der deutschen Offenlegungsschrift DE 33 35 870 wird die Herstellung von speziellen Wachsderivaten beschrieben, die als schmierend und/oder trennend wirksame Bestandteile zusammen mit Lösungsmitteln in Trennmitteln oder Kühlschmiermitteln enthalten sein können. Als Lösungsmittel werden die Fluorchlorkohlenwasserstoffe Trichlormonofluormethan, 1,1,2-Trichlor-1,2,2-trifluorethan, 1,1,2,2-Tetrachlordifluorethan, Tetrachlormonofluorethan und/oder Trichlordifluorethan als geeignet angegeben.

Es bestand die Aufgabe, neue verbesserte und die Umwelt weniger belastende Zusammensetzungen für die spanende, abrasive und/oder trennende Bearbeitung oder Verarbeitung von Werkstücken aus unterschiedlichen Materialien zur Verfügung zu stellen. Eine weitere Aufgabe der Erfindung war die Bereitstellung eines Verfahrens zur Herstellung dieser als Trenn- und Kühlschmiermittel geeigneten Zusammensetzungen.

Die Aufgaben werden gelöst durch die erfindungsgemäßen Zusammensetzungen, Verwendungen und Verfahren.

Es wurden nun als Trenn- und Kühlschmiermittel geeignete flüssige Zusammensetzungen gefunden, die 1-Chlor-2,2,2-trifluorethyl-difluormethylether und ein schmierend und/oder trennend wirksames Agens und gegebenenfalls weitere für Trenn- und Kühlschmiermittel übliche Zusätze aus der Gruppe der Verdunstungsregler, Lösungsvermittler, Korrosionsinhibitoren und Stabilisatoren enthalten.

In einer zweckmäßigen Ausgestaltung enthalten die als Trenn- und Kühlschmiermittel geeigneten flüssigen Zusammensetzungen wenigstens 15 Gew.-% 1-Chlor-2,2,2-trifluorethyl-difluormethylether. Beispielsweise können sie Mengen im Bereich von 15 bis 99,9 Gew.-% enthalten. Daneben enthalten sie 0,1 bis 80 Gew.-%, vorzugsweise 0,1 bis 40 Gew.-%, an schmierend und/oder trennend wirksamen Agenzien und gegebenenfalls bis zu 80 Gew.-% an Lösungsvermittlern und/oder Verdunstungsreglern.

Die erfindungsgemäßen Zusammensetzungen können als wirksames Agens ein schmierend und/oder trennend wirksames Agens aus der Gruppe der Wachse und Wachsderivate und/oder ein trennend wirksames Agens aus der Gruppe der Paraffine, Silikone, Metallseifen, Fette, Öle, Polymere und anorganischen Pulver enthalten. Wachse und Wachsderivate im Sinne der vorliegenden Erfindung umfassen sowohl natürliche Wachse tierischer oder pflanzlicher Herkunft wie auch synthetische Wachse und Wachsderivate. Unter den natürlichen Wachsen werden vorzugsweise natürliche Wachse mit einem Erweichungspunkt von mindestens 40 °C eingesetzt.

In einer bevorzugten Variante der Erfindung enthalten die erfindungsgemäßen Zusammensetzungen Wachse und/oder Wachsderivate aus der Gruppe der Ester von langkettigen Carbonsäuren und Monoalkoholen mit insgesamt 34 bis 50 C-Atomen und deren sulfochlorierten oder sulfidierten Derivaten und deren durch Hydrierung erhaltenen Derivaten und deren durch Fluorwasserstoffbehandlung erhaltenen Derivaten. Bevorzugt werden dabei Ester mit einer Jodzahl von unter 95, insbesondere 75 bis 95. Gemische solcher Fettsäureester sind bereits beschrieben und kornerziell verfügbar.

2

Beispielsweise eignen sich Wachsderivate die durch Sulfochlorierung, Sulfidierung, Hydrierung oder Fluorwasserstoffbehandlung von ungesättigten langkettigen Estern von Carbonsäuren mit Monoalkoholen mit insgesamt 34 bis 50 C-Atomen erhalten wurden. Die sulfochlorierten und sulfidierten Ester stehen dabei als kommerzielle Produkte zur Verfügung.

Es können auch die Wachsderivate eingesetzt werden, die durch Hydrierung von ungesättigten langkettigen Estern von Carbonsäuren mit Monoalkoholen mit insgesamt 34 bis 50 C-Atomen als nunmehr teilgesättigte oder vollständig gesättigte Derivate erhalten wurden. In diesem Zusammenhang werden unter teilgesättigten Derivaten solche verstanden, deren Jodzahl unter der des bei der Hydrierung eingesetzten Eduktes liegt. Beispielsweise können als teilgesättigte bis gesättigte Derivate Ester mit Jodzahlen von unter etwa 40 eingesetzt werden. Sowohl die teilgesättigten als auch die gesättigten Ester sind kommerziell erhältlich.

Es können ferner Wachsderivate eingesetzt werden, die durch Fluorwasserstoffbehandlung von ungesättigten langkettigen Estern von Carbonsäuren mit Monoalkoholen mit insgesamt 34 bis 50 C-Atomen erhalten wurden. Die durch Fluorwasserstoffbehandlung erhaltenen Derivate sind z.B. aus der DE 33 35 870 bekannte, Fluor enthaltende, wachsartige Massen, deren Fluorgehalt in einem weiten Bereich variierbar ist. Der Fluorgehalt dieser Addukte von Fluorwasserstoff an diese ungesättigten langkettigen Ester liegt z.B. im Bereich von 0,1 bis 4,3 Gew.-%. Eine völlig andere Art von Derivaten der langkettigen ungesättigten Ester, die durch Fluorwasserstoffbehandlung erhältlich sind, sind ölige Produkte, nachstehend Sesquimere genannt, die gegenüber dem Ausgangswachs die 1,1- bis 1,9-fache Molmasse und einen Gehalt an nicht umgesetztem Wachs von unter 1 Gew.-% enthalten. Diese Wachsderivate enthalten - wenn überhaupt - nur sehr geringe Gehalte an gebundenem Fluor. In der Regel liegt der Fluorgehalt unter 0,1 Gew.-% und die Jodzahl in einem Bereich von 5 bis 20.

Weitere Wachse, die im Sinne der vorliegenden Erfindung verwendet werden können, sind Paraffinwachse oder synthetische Polymere wie z.B. gegebenenfalls oxidierte Polyethylenwachse. So eignet sich z.B. ein oxidiertes Polyethylenwachs mit mittlerem Molekulargewicht von 3700 bis 4500 (viskosimetrisch).

Als trennende Agenzien können in den erfindungsgemäßen Zusammensetzungen auch Silikone enthalten sein. Die verwendeten Silikone können in Form von Ölen, Fetten oder Harzen vorliegen. Die Silikone können als solche oder in Form von Silikonemulsionen oder Silikonpasten, die einen Konsistenzregler, beispielsweise hochdisperse Kieselsäure in das Silikonöl eingearbeitet, enthalten, verwendet werden. Silikonfette enthalten gewöhnlich Metallseifen als konsistenzregelnde Bestandteile. Die in der vorliegenden Erfindung verwendeten Silikonprodukte sind im Handel verfügbare Produkte. Als Silikonöl kann beispielsweise ein Silikonöl mit einem breiten Viskositätsbereich im Bereich von 100 bis 60.000 mm$^2$/s, insbesondere mit einer Viskosität von 10.000 bis 30.000 mm$^2$/s, z. B. 15.000 bis 25.000 mm$^2$/s, eingesetzt werden.

Als weitere trennend wirksame Agenzien eignen sich Metallseifen, beispielsweise Fettsäuresalze der Metalle Magnesium, Calcium, Zink, Aluminium oder Blei. Gegebenenfalls werden die Metallsalze der Stearinsäure eingesetzt, wobei dann das Magnesiumstearat bevorzugt ist.

Als weitere trennend wirksame Agenzien können die erfindungsgemäßen Zusammensetzungen auch anorganische Pulver, vorzugsweise Graphit, Talkum oder Glimmer, enthalten.

Es können auch andere übliche Agenzien mit trennend wirksamen Eigenschaften wie Öle, z.B. Mineral- und Esteröle, in den erfindungsgemäßen Zusammensetzungen verwendet werden. Weitere geeignete trennend wirksame Agenzien sind Polymere, z.B. polymere Alkohole wie beispielsweise Polyethylenglycol, Polyamide Polyolefine oder Polytetrafluorethylenwachse.

In einer bevorzugten Ausgestaltung der Erfindung enthalten die erfindungsgemäßen Zusammensetzungen für Trenn- oder Kühlschmiermittel übliche Lösungsvermittler und/oder Verdunstungsregler aus der Gruppe flüssiger aliphatischer Kohlenwasserstoffe mit Siedepunkten von bis zu 200 °C, niederer Alkohole mit 1 bis 5 C-Atomen, niederer Ketone und niederer Carbonsäureester. Die Lösungsvermittler dienen im allgemeinen zur besseren Lösung der in den Zusammensetzungen verwendeten trennend und/oder schmierend wirksamen Agenzien, insbesondere zur besseren Lösung der gesättigten, teilgesättigten und/oder sulfochlorierten oder sulfidierten und/oder durch Fluorwasserstoffbehandlung erhaltenen Derivate von Estern der langkettigen Carbonsäuren und Monoalkoholen mit insgesamt 34 bis 50 C-Atomen. Verdunstungsregler haben im allgemeinen die Aufgabe, ein allzuschnelles Verdunsten der Zusammensetzungen während der Anwendung, z.B. als Kühlschmiermittel, zu verhindern.

Bevorzugt werden als Lösungsvermittler und/oder Verdunstungsregler in den erfindungsgemäßen als Trenn- und Kühlschmiermittel geeigneten flüssigen Zusammensetzungen flüssige aliphatische Kohlenwasserstoffe mit Siedepunkten von bis zu 200 °C, niedere aliphatische Alkohole oder niedere Carbonsäureester eingesetzt, die mit 1-Chlor-2,2,2-trifluorethyl-difluormethylether ein Azeotrop oder azeotropartige Gemische zu bilden vermögen. Beispiele für mögliche Lösungsvermittler und/oder Verdunstungsregler sind niedere Alkohole, beispielsweise Methanol, Ethanol, n-Propanol, i-Propanol, niedere Carbonsäureester wie beispiels-

EP 0 563 806 A2

weise Methylacetat, flüssige aliphatische Kohlenwasserstoffe z. B. Benzinfraktionen mit Siedepunkten von bis zu 200 °C, beispielsweise Heptan oder Benzinfraktionen mit einem Siedebereich von 100 bis 140 °C. Es können natürlich auch andere an sich bekannte Lösungsvermittler und/oder Verdunstungsregler Verwendung finden.

Vorteilhaft enthalten die erfindungsgemäßen Zusammensetzungen die Lösungsvermittler und/oder Verdunstungsregler in einer Menge von 1 bis 80 Gew.-%, vorzugsweise 1 bis 40 Gew.-%.

Bei weiteren Ausgestaltungen der erfindungsgemäßen Zusammensetzungen kann es vorteilhaft sein, bekannte Stabilisatoren und/oder Korrosionsinhibitoren in einer Menge von bis zu 1 Gew.-% zuzusetzen. Die erfindungsgemäßen als Trenn- und Kühlschmiermittel geeigneten Zusammensetzungen können daher kommerziell verfügbare Korrosionsinhibitoren für Metalle wie z. B. Magnesium, Aluminium, Titan, Messing, Bronze oder Stahl enthalten. Solche Korrosionsinhibitoren basieren zumeist auf Zusammensetzungen, die organische Verbindungen mit Heteroatomen wie Schwefel oder insbesondere Stickstoff enthalten. Bewährt haben sich z.B. einzelne Verbindungen oder Gemische aus der Klasse der Benzothiazole, z.B. Mercaptobenzothiazol, Benzimidazole, z.B. 2-Phenylbenzimidazol, Triazole, z.B. Benzotriazole, Tolyltriazole, Oxazoline, z.B. Alkyl- und/oder Hydroxyalkylsubstituierte Oxazoline, Amide, Amine, z.B. tertiäre Amine. Besonders vorteilhaft haben sich dabei Korrosionsinhibitoren auf der Basis von Oxazolin erwiesen.

Weiterhin können den erfindungsgemäßen Zusammensetzungen gegebenenfalls übliche Stabilisatoren oder konsistenzregelnde Additive zugesetzt sein.

Je nach Anwendung können die Konzentrationen der schmierend und/oder trennend wirksamen Agenzien in den erfindungsgemaßen Zusammensetzungen variieren. So können in einer vorteilhaft als Kühlschmiermittel geeigneten Zusammensetzung die vorgenannten Wachse und/oder Wachsderivate als schmierend wirksames Agens in einer Menge von 0,1 bis 25 Gew.-%, vorzugsweise 0,5 bis 5 Gew.-% enthalten sein.

In einer besonders als Kühlschmiermittel geeigneten vorteilhaften Variante sind die vorgenannten Lösungsvermittler und/oder Verdunstungsregler in einer Menge von 1 bis 40 Gew.-%, vorzugsweise 1 bis 15 Gew.-%, enthalten.

In einer vorteilhaft als Trennmittel geeigneten Zusammensetzung ist ein trennend wirksames Agens zweckmäßig in einer Menge von 0,1 bis 35 Gew.-% enthalten.

In als Trennmittel geeigneten Zusammensetzungen können übliche Lösungsvermittler in Mengen von bis zu 80 Gew.-%, enthalten sein. Vorzugsweise werden als Lösungsvermittler in als Trennmittel geeigneten Zusammensetzungen Benzinfraktionen mit einem Siedebereich innerhalb 100 bis 140 °C in einer Menge von 10 bis 80 Gew.-% eingesetzt.

Die erfindungsgemäßen Zusammensetzungen liegen entweder als Lösungen oder als Dispersionen vor, wobei unter Dispersionen sowohl Emulsionen als auch Suspensionen verstanden werden.

Die Erfindung umfaßt auch das Verfahren zur Herstellung der erfindungsgemäßen Zusammensetzungen, wobei man in 1-Chlor-2,2,2-trifluorethyl-difluormethylether ein oder mehrere schmierend und/oder trennend wirksame Agenzien und gegebenenfalls weitere für Trenn- und Kühlschmiermittel übliche Zusätze aus der Gruppe der Verdunstungsregler, Lösungsvermittler, Korrosionsinhibitoren und Stabilisatoren einarbeitet.

Weiterhin umfaßt die Erfindung auch die Verwendung der Zusammensetzungen als Kühlschmiermittel oder als Trennmittel z.B. bei der Kunststoff- oder Schaumstoffherstellung oder in anderen Anwendungsbereichen.

Bei ihrer Verwendung als Kühlschmiermittel können die erfindungsgemäßen Zusammensetzungen insbesondere zur Bearbeitung von Metallen auf alle bekannten Arten angewendet werden. So können die erfindungsgemäßen Zusammensetzungen z. B. während der Metallbearbeitung als Flüssigkeit oder als Aerosol appliziert werden. Außerdem können die erfindungsgemäßen Zusammensetzungen sowohl extern appliziert, d.h. von außen an das Werkzeug herangeführt werden, als auch intern, d.h. durch geeignete, im Werkzeug selbst vorgesehene Zuführungen. Die interne Applikation wird z.B. beim Ausführen tiefer Bohrungen oder beim Innenschleifen angewandt. Die erfindungsgemäßen Zusammensetzungen können außerdem als Kühlschmiermittel allgemein zur abrasiven Behandlung harter Oberflächen eingesetzt werden. Mit den erfindungsgemäßen Zusammensetzungen in Verfahren zur spanenden, trennenden oder abrasiven Bearbeitung von Metallen wird im Vergleich zur Verwendung von Kühlschmiermitteln nach dem Stand der Technik ein deutlich geringerer Energieaufwand, insbesondere bei der spanenden, trennenden oder abrasiven Behandlung von Metallen wie Magnesium, Aluminium, Titan, Messing, Bronze oder Stahl verzeichnet. Diese Beobachtung tritt besonders deutlich in Erscheinung, wenn kompaktere Metallstücke z. B. zu bohren, fräsen oder schneiden sind. Außerdem wird bei Verwendung der erfindungsgemäßen Zusammensetzungen als Kühlschmiermittel in Metallbearbeitungsverfahren eine gute Spanabführung gesichert und Aufbauschneiden werden verhindert. Die erfindungsgemäßen Zusammensetzungen zeigen sehr günstige Reibverschleiß-

4

werte, was ein Indiz für die sehr guten Kühl- und Schmiereigenschaften ist.

Auch als Trennmittel können die erfindungsgemäßen Zusammensetzungen, beispielsweise in der Metall- oder Kunststoffverarbeitung, verwendet werden. Die erfindungsgemäßen Zusammensetzungen vermindern in vorteilhafter Weise die Adhäsion zwischen Werkzeug und Werkstück oder Form und Formling, die aus Metall oder Kunststoff, beispielsweise aus Polyester, Silikonpolymeren oder Polyurethanen, bestehen. Vorzugsweise eignen sich die erfindungsgemäßen Zusammensetzungen als Trennmittel bei der Herstellung von geformten Kunststoffteilen, insbesondere Schaumstoffteilen. Durch die Verwendung der erfindungsgemäßen Zusammensetzung als Trennmittel können so Oberflächenprobleme zwischen Werkzeug und Werkstück beispielsweise beim Spritzgießen von Kunststoffen vermieden werden. Mit guten Erfolg lassen sich die erfindungsgemäßen Zusammensetzungen als Trennmittel bei der Polyurethan-Verschäumung einsetzen, wobei sie die Schaumbildung praktisch nicht beeinträchtigen. Hierbei besteht ein Vorteil der erfindungsgemäßen Trennmittel darin, daß sie sehr energiesparend eingesetzt werden können. Bekanntermaßen muß beim Herstellen von Schaumstoffen nach dem Bestreichen der Form mit dem Trennmittel zunächst das Lösungsmittel verdampft werden. Bei Verwendung der erfindungsgemäßen Zusammensetzung braucht die Form zum Verdampfen des Lösungsmittels weit weniger aufgeheizt zu werden als bei anderen üblichen vorbekannten Zusammensetzungen. Auch beim Formgießen von Kunststoffen stellen die erfindungsgemäßen Trennmittel ebenfalls ein wertvolles, die Entformung erleichterndes Produktionshilfsmittel dar. Zusätzliche Vorteile der erfindungsgemäßen Zusammensetzungen zeigen sich bei längerem Einsatz der verwendeten Formen z.B. darin, daß die verwendeten Formen zwischen den Arbeitsgängen seltener gereinigt werden müssen. Die erfindungsgemäßen Trennmittel können in der üblichen Weise, z.B. als Flüssigkeiten, Pasten oder versprühbare Trennmittel, die beispielsweise mit Handsprühgeräten, Aerosoldosen oder automatischen Sprühsystemen aufgetragen werden, zur Anwendung kommen.

Die erfindungsgemäßen Zusammensetzungen mit 1-Chlor-2,2,2-trifluorethyl-difluormethylether als Verdünnungs- bzw. Lösungsmittel weisen gute adhäsionsvermindernde Eigenschaften, hohe chemische Indifferenz und gutes Spreitungsvermögen und hohe Ergiebigkeit auf. Außerdem bewirkt der hohe Gehalt an 1-Chlor-2,2,2-trifluorethyl-difluormethylether in den erfindungsgemäßen Zusammensetzungen eine starke Erhöhung des Flammpunktes, so daß die Zusammensetzung teilweise praktisch keinen Flammpunkt mehr zeigt. Die Herstellung der erfindungsgemäßen Zusammensetzungen gestaltet sich infolge der sehr guten Dispergier- bzw. Emulgierkraft des 1-Chlor-2,2,2-trifluorethyl-difluor-methylethers besonders einfach.

Die nachfolgenden Beispiele sollen die Erfindung näher erläutern, ohne sie jedoch in ihrem Umfang zu begrenzen.

Beispiel 1:

Eine erfindungsgemäße Zusammensetzung wurde hergestellt, indem 5 Gew.-% HF-Wachs-Addukt ( = Substanz des Beispiels 1 aus der deutschen Offenlegungsschrift DE 33 35 870), 21,0 Gew.-% 1-Chlor-2,2,2-trifluorethyl-difluormethylether und 74,0 Gew.-% einer Benzinfraktion mit einem Siedebereich von 100 bis 140 °C miteinander vermischt wurden. Unter HF-Wachs-Addukt versteht man ein Wachsderivat, welches durch Fluorwasserstoff-Behandlung von ungesättigten langkettigen Estern von Carbonsäuren mit Monoalkoholen mit insgesamt 34 bis 50 C-Atomen erhalten wird, wobei dieses Derivat an die Doppelbindungen des Eduktes addierten Fluorwasserstoff aufweist. Die Herstellung dieses HF-Wachs-Adduktes entspricht dem Beispiel 1 der deutschen Offenlegungsschrift DE 33 35 870.

Man erhielt die erfindungsgemäße Zusammensetzung als Dispersion.

Beispiele 2 bis 11:

Analog zu Beispiel 1 wurden die weiteren in der folgenden Tabelle wiedergegebenen Beispiele 2 bis 11 von erfindungsgemäßen Zusammensetzungen hergestellt, die ebenfalls hervorragende trennmittelwirksame Eigenschaften besitzen. Die Komponenten sind in Gew.-% angegeben.

Beispiele 2 - 11

| Zusammensetzungs-bestandteile | | 2 | 3 | 4 | 5 | 6 | 7 | 8 | 9 | 10 | 11 |
|---|---|---|---|---|---|---|---|---|---|---|---|
| 1-Chlor-2,2,2-tri-fluorethyl-difluor-methylether | | 95,0 | 95,0 | 22,0 | 19,0 | 50,0 | 20,0 | 80,0 | 20,0 | 75,0 | 20,0 |
| Sesquimer | * | 5,0 | | | | | | | | | |
| Wachsester (Jodzahl 90 - 80) | | | 5,0 | | | | | | | | |
| Wachsester (Jodzahl 40 - 20) | | | | 4,0 | | | | | | | |
| Wachsester (Jodzahl 20 - 0) | | | | | 5,0 | | | | | | |
| Siliconöl (20.000 mm²/s) | | | | | | 35,0 | | | | | |
| Paraffin (Schmelzp. 56 - 58 °C) | | | | | | | 6,0 | . | | | |
| Oxidiertes Poly-ethylenwachs (Schmelzp. 89 - 99 °C) | | | | | | | | 6,0 | 4,0 | 10,0 | |
| Polyethylenwachs (Schmelzp. 89 - 108 °C) | | | | | | | | | | | 7,0 |
| Magnesiumstearat | | | | | | | | | | 1,0 | |
| Benzinfraktion (100 - 140 °C) | | | | 74,0 | 76,0 | 15,0 | 74,0 | 14,0 | 76,0 | 14,0 | 73,0 |
| Art der Zusammen-setzung ** | | D | D | L | D | L | D | D | D | D | D |

\* Substanz des Beispiels 2 der deutschen Offenlegungsschrift DE 33 35 870
\*\* L = klare Lösung;  D = Dispersion

Beispiele 12 bis 26:

Analog zu Beispiel 1 wurden die weiteren in der folgenden Tabelle wiedergegebenen Beispiele 12 bis 26 von erfindungsgemäßen Zusammensetzungen hergestellt, die gute schmierende Eigenschaften besitzen und sich als Kühlschmiermittel zur spanenden, trennenden und abrasiven Metallbearbeitung eignen. Die Komponenten sind in Gew.-% angegeben.

| Zusammensetzungsbestandteile | 12 | 13 | 14 | 15 | 16 | 17 | 18 | 19 | 20 | 21 | 22 | 23 | 24 | 25 | 26 |
|---|---|---|---|---|---|---|---|---|---|---|---|---|---|---|---|
| 1-Chlor-2,2,2-trifluorethyl-difluormethylether | 95,0 | 95,9 | 93,2 | 92,8 | 64,2 | 97,0 | 95,9 | 94,7 | 94,3 | 63,7 | 94,2 | 94,5 | 92,6 | 63,0 | 93,5 |
| Sesquimer (Jodzahl 14) * | | | | | | 3,0 | 1,5 | 1,5 | 1,5 | 1,0 | | | 3,0 | 1,5 | |
| Wachsester (Jodzahl 90 - 80) | 5,0 | 1,5 | 3,0 | 3,0 | 0,5 | | | | | | 3,0 | 1,5 | | | 1,5 |
| Isopropanol | | 2,6 | | | | | 2,6 | | | | 2,6 | | | | |
| Ethanol | | | 3,8 | | | | | 3,8 | | | | 3,8 | | | |
| Methanol | | | | 4,2 | | | | | 4,2 | | | | 4,2 | | |
| Methylacetat | | | | | 35,3 | | | | | 35,3 | | | | 35,3 | |
| n-Heptan | | | | | | | | | | | | | | | 5,0 |
| Korrosionsinhibitor auf der Basis Oxazolin | | | | | | | | | | | 0,2 | 0,2 | 0,2 | 0,2 | |
| Art der Zusammensetzung ** | D | L | L | L | L | D | D | D | D | D | L | L | D | D | L |

\* Substanz des Beispiels 2 der deutschen Offenlegungsschrift DE 33 35 870

\*\* L = Klare Lösung; D = Dispersion

Beispiel 27:

Um die trennmittelwirksamen Eigenschaften der erfindungsgemäßen Zusammensetzungen zu beurteilen, wurden die Innenflächen einer Gußform zur Herstellung von Schaumkunststoffen mit einer dünnen Schicht einer erfindungsgemäßen Zusammensetzung ausgestrichen. Die Gußform bestand aus einer Grundplatte aus Polyethylen, Seitenwänden aus Stahl und einer Deckplatte aus Aluminium. In diese mit einer erfindungsgemäßen Zusammensetzung behandelten Gußform wurde eine an sich übliche Reaktionsmischung zur Herstellung von Polyurethan-Schaumstoffen eingefüllt und anschließend auf an sich bekannte Weise die Polymerisation zu einem Polyurethan-Schaumkörper durchgeführt.

Die Eignung der erfindungsgemäßen Zusammensetzung als Trennmittel wurde danach beurteilt, wie vollständig und wie leicht sich der gebildete Polyurethan-Schaumkörper nach der Polymerisation aus der Gußform lösen ließ. Die folgenden Kriterien lagen dabei der Beurteilung zugrunde:

a) schlechte Trennwirkung: Schaumkörper klebt an den Innenflächen der Gußform

b) gute Trennwirkung: Schaumkörper kann leicht von den Innenflächen der Gußform getrennt werden

c) ausgezeichnete Trennwirkung: kein Anhaften zwischen Innenflächen der Gußform und Schaumkörper feststellbar.

Die Herstellung eines Polyurethan-Schaumkörpers wurde 7 mal hintereinander durchgeführt, ohne daß zwischendurch die Gußform nocheinmal mit einer erfindungsgemäßen Zusammensetzung behandelt wurde.

Die folgende Tabelle zeigt die Bewertung einer erfindungsgemäßen Zusammensetzung hinsichtlich ihrer Eignung als Trennmittel. In den Versuchen wurde die Zusammensetzung des Beispiels Nr. 8 eingesetzt.

| Anzahl der Verschäumungsvorgänge | Trennmittelwirkung |
|---|---|
| 1 | ausgezeichnet |
| 2 | ausgezeichnet |
| 3 | ausgezeichnet |
| 4 | ausgezeichnet |
| 5 | ausgezeichnet |
| 6 | gut |
| 7 | schlecht |

Die obigen Ergebnisse zeigen, daß die eingesetzte erfindungsgemäße Zusammensetzung für 5 hintereinander durchgeführte Verschäumungsvorgänge eine ausgezeichnete Trennwirkung aufweist. Dies entspricht annähernd 70 % aller mit dieser Zusammensetzung durchgeführten Versuche. Eine gute oder ausgezeichnete Trennwirkung wurde für annähernd 85 % aller mit dieser Zusammensetzung durchgeführten Versuche erreicht.

Ähnlich ausgezeichnete Ergebnisse wurden mit der erfindungsgemäßen Trennmittelzusammensetzung des Beispiels 1 sowie den in Beispiel 2 bis 11 angegebenen Trennmittelzusammensetzungen erzielt.

**Patentansprüche**

1. Als Trenn- und Kühlschmiermittel geeignete flüssige Zusammensetzungen, enthaltend 1-Chlor-2,2,2-trifluorethyl-difluormethylether und ein schmierend und/ oder trennend wirksames Agens und gegebenenfalls weitere für Trenn- und Kühlschmiermittel übliche Zusätze aus der Gruppe der Verdunstungsregler, Lösungsvermittler, Korrosionsinhibitoren und Stabilisatoren.

2. Zusammensetzungen nach Anspruch 1, dadurch gekennzeichnet, daß sie wenigstens 15 Gew.-% 1-Chlor-2,2,2-trifluorethyl-difluormethylether, 0,1 bis 80 Gew.-%, vorzugsweise 0,1 bis 40 Gew.-%, an schmierend und/oder trennend wirksamem Agens und gegebenenfalls bis zu 80 Gew.-% an Lösungsvermittlern und/oder Verdunstungsreglern enthalten.

3. Zusammensetzungen nach Anspruch 1, dadurch gekennzeichnet, daß sie als wirksames Agens ein schmierend und/oder trennend wirksames Agens aus der Gruppe der Wachse und Wachsderivate und/oder ein trennend wirksames Agens aus der Gruppe der Paraffine, Silikone, Metallseifen, Fette, Öle, Polymere und anorganischen Pulver enthalten.

4. Zusammensetzungen nach Anspruch 3, dadurch gekennzeichnet, daß sie Wachse und/oder Wachsderivate aus der Gruppe der Ester von langkettigen Carbonsäuren und Monoalkoholen mit insgesamt 34 bis 50 C-Atomen, deren sulfochlorierte oder sulfidierte Derivate, deren durch Hydrierung erhaltene Derivate und deren durch Fluorwasserstoffbehandlung erhaltene Derivate enthalten.

5. Zusammensetzungen nach Anspruch 4, dadurch gekennzeichnet, daß die Wachse und/oder Wachsderivate eine Jodzahl von unter 95 aufweisen.

6. Zusammensetzungen nach den Ansprüchen 1 bis 5, dadurch gekennzeichnet, daß sie Lösungsvermittler und/oder Verdunstungsregler aus der Gruppe flüssiger aliphatischer Kohlenwasserstoffe mit Siedepunkten von bis zu 200 °C, niederer Alkohole mit 1 bis 5 C-Atomen, niederer Ketone und niederer Carbonsäureester enthalten.

7. Zusammensetzungen nach Anspruch 6, dadurch gekennzeichnet, daß sie als Lösungsvermittler und/oder Verdunstungsregler aliphatische Kohlenwasserstoffe, niedere aliphatische Alkohole oder niedere Carbonsäureester enthalten, die mit 1-Chlor-2,2,2-trifluorethyl-difluormethylether ein Azeotrop oder azeotropartige Gemische zu bilden vermögen.

8. Zusammensetzungen nach einem der vorherigen Ansprüche, dadurch gekennzeichnet, daß sie Lösungsvermittler und/oder Verdunstungsregler in einer Menge von 1 bis 80 Gew.-%, vorzugsweise 1 bis 40 Gew.-%, enthalten.

9. Zusammensetzungen nach einem der vorherigen Ansprüche, dadurch gekennzeichnet, daß sie Stabilisatoren und/ oder Korrosionsinhibitoren in einer Menge von bis zu 1 Gew.-% enthalten.

10. Als Kühlschmiermittel geeignete Zusammensetzungen nach Anspruch 1, dadurch gekennzeichnet, daß sie als schmierend wirksames Agens Wachse und/oder Wachsderivate in einer Menge von 0,1 bis 25 Gew.-%, vorzugsweise 0,5 bis 5 Gew.-%, enthalten.

11. Zusammensetzungen nach Anspruch 10, dadurch gekennzeichnet, daß sie Lösungsvermittler und/oder Verdunstungsregler in einer Menge von 1 bis 40 Gew.-%, vorzugsweise 1 bis 15 Gew.-%, enthalten.

12. Als Trennmittel geeignete Zusammensetzungen nach Anspruch 1, dadurch gekennzeichnet, daß sie ein trennend wirksames Agens in einer Menge von 0,1 bis 35 Gew.-% enthalten.

13. Zusammensetzungen nach Anspruch 12, dadurch gekennzeichnet, daß sie als trennend wirksames Agens Wachse und/oder Wachsderivate und/oder Paraffine, Polyethylene oder Silikonöl und/oder Metallseifen der Metalle Magnesium, Calcium, Zink, Aluminium oder Blei enthalten.

14. Zusammensetzungen nach Anspruch 12 und 13, dadurch gekennzeichnet, daß sie als Lösungsvermittler eine Benzinfraktion mit einem Siedebereich innerhalb 100 bis 140 °C in einer Menge von 10 bis 80 Gew.-% enthalten.

15. Verwendung der Zusammensetzungen nach Anspruch 1 bis 14 als Trenn- oder Kühlschmiermittel.

16. Verfahren zur Herstellung von Zusammensetzungen gemäß einem der Ansprüche 1 bis 15, dadurch gekennzeichnet, daß man in 1-Chlor-2,2,2-trifluorethyl-difluormethylether ein oder mehrere schmierend und/oder trennend wirksame Agenzien und gegebenenfalls weitere für Trenn- und Kühlschmiermittel übliche Zusätze aus der Gruppe der Verdunstungsregler, Lösungsvermittler, Korrosionsinhibitoren und Stabilisatoren einarbeitet.